# FASCICULE DE BREVET EUROPEEN

(11) **EP 0 515 444 B1**
(45) Date de publication et mention de la délivrance du brevet: **08.06.1994**
(21) Numéro de dépôt: 91903806.7
(22) Date de dépôt: 04.02.1991
(51) Int. Cl.: G03B 27/58

(54) **PROCEDE D'EMBALLAGE, EMBALLAGE DE PRODUITS PHOTOSENSIBLES EN BANDES**
VERFAHREN ZUR VERPACKUNG, VERPACKUNG VON LICHTEMPFINDLICHEN BANDMATERIALIEN
METHOD OF PACKING, PACKING OF ROLLS OF PHOTOSENSITIVE PRODUCTS

(30) Priorité: 12.02.1990 FR 9001858
(43) Date de publication de la demande: 02.12.1992
(73) Titulaire: KODAK-PATHE, F-75594 Paris Cedex 12 (FR); EASTMAN KODAK COMPANY, Rochester, New York 14650-2201 (US)
(72) Inventeur: JACQUAND, Daniel, René, Lucien, F-71102 Chalon-sur-Saône Céde (FR); BONNAMOUR, Robert, Georges, Kodak-Pathé, F-71102 Châlon-sur-Saône (FR)
(74) Mandataire: Buff, Michel
(86) Numéro de dépôt international: FR9100074
(87) Numéro de publication internationale: WO9112561

(56) Documents cités:
- DE-A- 2 540 610
- DE-A- 2 628 339
- DE-B- 1 197 717
- DE-C- 599 354
- US-A- 3 266 689
- US-A- 4 741 439
- PATENT ABSTRACTS OF JAPAN, vol. 3, no. 76 (M-64), 29 juin 1979 ; & JP-A-5453757

## Description

L'invention est relative au conditionnement de produits photographiques en bandes et plus particulièrement à un emballage permettant de transporter des très grandes bandes enroulées sur des mandrins.

A l'heure actuelle, les papiers photographiques utilisés pour les tirages se présentent de deux manières distinctes : soit au format sous la forme de feuilles individuelles, soit sous la forme de rouleaux que l'on découpe généralement après traitement. Dans cette dernière utilisation, les rouleaux présentent différentes dimensions adaptées aux machines qui les utilisent.

La présentation en rouleaux a permis l'accroissement de la productivité. Toutefois, les machines de tirage ont besoin d'être disposées dans des locaux au noir pour permettre les opérations de chargement des machines puisque le papier photographique doit être protégé de la lumière. Lors des opérations de fabrication, les rouleaux sont obtenus par découpe longitudinale d'une nappe de grande largeur, par exemple supérieur à un mètre, en bandes individuelles présentant une largeur relativement étroite, par exemple 95 mm, 102 mm, 127 mm, ou plus qui sont enroulées. Les rouleaux sont ensuite emballés individuellement dans des pochettes étanches à la lumière par exemple de la manière mentionnée au brevet des Etats-Unis d'Amérique 4 876 125. Lors de l'utilisation, il faut déballer les rouleaux et les disposer dans les machines. Toutes ces opérations se font obligatoirement dans le noir et prennent du temps.

Pour améliorer l'efficacité des machines on a conçu des emballages adaptés à chaque machine. De tels types d'emballages, appelés chargeurs, sont décrits par exemple dans le brevet des Etats-Unis d'Amérique 4 741 439. Ces chargeurs permettent une utilisation aisée de la machine puisqu'il n'y a plus besoin, pour disposer le papier photographique dans la machine, de local pouvant être mis à l'obscurité totale. Toutefois les longueurs de rouleaux sont limitées et, lors de leur utilisation, on a besoin de renouveler fréquemment les chargeurs et de raccorder les bandes entre elles.

Pour accroître la productivité des machines, on a proposé d'augmenter la dimension des rouleaux. Toutefois, le poids des rouleaux devient important et leur manipulation, à la fois pour les emballer ou pour les déballer, devient fastidieuse compte tenu de leur poids. A l'heure actuelle on utilise des rouleaux atteignant 500 m environ. Le poids de ces rouleaux est supérieur à 10 kg et le diamètre supérieur à 40 cm.

Compte tenu de leurs dimensions, les rouleaux présentent une stabilité accrue lorsqu'ils ont leur axe orienté verticalement. Toutefois les machines de tirage que l'on trouve actuellement sur le marché utilisent des rouleaux dont les axes sont orientés horizontalement. L'un des objets de l'invention est donc d'éviter d'avoir à basculer les rouleaux.

Ces dernières années ont révélé une tendance à la bipolarisation du marché des tirages photographiques. En effet, on a vu, d'une part, une augmentation du nombre de petits laboratoires utilisant des machines automatiques dont le chargement est effectué par les chargeurs mentionnés précédemment et présentant une productivité limitée et d'autre part une diminution du nombre des laboratoires de traitement fournissant un nombre d'épreuves important avec un accroissement considérable de volume de papier pour chacun de ces laboratoires.

L'invention est plus particulièrement destinée à l'approvisionnement des "gros" laboratoires utilisant un volume de papier très important.

Pour augmenter encore la productivité de ces "gros" laboratoires, on aimerait disposer de rouleaux encore plus longs, mais le poids devient prohibitif pour un chargement manuel et le basculement des rouleaux devient génant.

Le document JP-A-54-53 757 décrit des supports pour rouleaux de produits en bande enroulés sur des mandrins. Toutefois, les supports décrits ne sont pas adaptés à la manutention de rouleaux préalablement réalisés sur d'autres machines. Chaque support est en réalité destiné à l'enroulement d'une bande unique sur sa broche. De plus, aucune enveloppe étanche à la lumière n'est prévue.

Le document DE-A-2 628 339 décrit un chariot destiné au transport et à l'enroulement de rouleaux de tôles. Ce chariot comprend une broche expansible en porte-à-faux adaptée pour recevoir les rouleaux de tôles. Il n'est pas prévu d'enveloppe étanche à la lumière et rien ne suggère la possibilité de disposer plusieurs rouleaux sur la broche unique.

Le document DE-A-2 540 610 décrit un emballage collectif pour des rouleaux de produits photographiques, comprenant un socle, une enveloppe rigide, le socle et l'enveloppe étant opaques à la lumière, des organes pour maintenir plusieurs rouleaux et un moyen de verrouillage ayant deux états pour immobiliser ou libérer des mandrins. Dans cet emballage ne sont pas prévues des broches et des moyens de verrouillage selon la revendication 1.

Un objet de l'invention consiste à fournir un emballage susceptible de recevoir des rouleaux de grande longueur, compris entre 500 m et 2000 m environ, dont la conception permet un chargement aisé des machines avec des mécanismes simples et peu coûteux.

Un autre objet de l'invention est de fournir un emballage ne nécessitant que peut de matériau d'emballage et de main-d'oeuvre afin de diminuer les coûts de fabrication.

Un objet de l'invention concerne un emballage collectif réutilisable pour produit photographique enroulé sur des mandrins de manière à former des rouleaux. L'emballage suivant l'invention comprend :
a) un socle, opaque à la lumière, présentant une surface principale et adapté à la manutention par chariot élévateur ;
b) une enveloppe rigide, opaque à la lumière et reliable audit socle par un moyen étanche à la lumière ;
c) au moins une broche présentant une extrémité libre, solidaire du socle, susceptible de maintenir à l'intérieur de l'enveloppe plusieurs rouleaux rouleaux soit pratiquement parallèle à ladite surface principale dudit socle ;
d) un moyen de verrouillage pouvant être mis en oeuvre à partir de l'extérieur de ladite enveloppe rigide pour, dans un premier état, immobiliser lesdits mandrins par rapport à ladite broche et dans un second état rendre indépendant les uns des autres ladite broche solidaire du socle et lesdits mandrins.

Dans un mode de réalisation de l'invention le moyen de verrouillage est obtenu par une broche en au moins deux parties de manière que son diamètre puisse varier entre une première dimension dans laquelle on peut faire coulisser sur cette broche lesdits mandrins et une seconde dimension, supérieure à la première, dans laquelle lesdits mandrins sont immobilisés.

Dans un mode de réalisation préféré, l'enveloppe comprend une première partie reliée en permanence au socle et une seconde partie mobile ou articulée par rapport à la première partie de manière à permettre l'accès à la partie libre de la ou des broches afin de pouvoir enfiler ou extraire les rouleaux sur ladite ou lesdites broches.

Avantageusement l'ouverture dégagée par la seconde partie mobile par rapport au socle et à la broche présente une surface externe supérieure au tiers de la surface totale externe de l'enveloppe afin de dégager au maximum l'accès auxdits rouleaux enfilés sur les broches.

Un autre objet de l'invention est relatif à un procédé d'emballage de produit en bandes dans lequel les bandes, qui sont obtenues à partir de la découpe en bandes d'une feuille présentant une largeur importante, sont enroulées sur des mandrins portés par une broche de machine de coupe de manière à former des rouleaux, procédé consistant à, après découpe de la feuille et formation des rouleaux, faire coulisser directement les rouleaux de la broche de machine de coupe sur la broche d'un emballage collectif, broche dont le diamètre de ladite broche présente une première dimension et finalement modifier ledit diamètre de la broche de l'emballage collectif de manière à ce qu'il prenne une seconde dimension plus grande que ladite première dimension afin d'immobiliser lesdits rouleaux.

D'autres objets et avantages de la présente invention apparaîtront à la lecture de la description qui suit faite en référence aux dessins annexés dans lesquels :
- la Fig. 1 représente schématiquement et en perspective un mode de réalisation du dispositif de manutention suivant l'invention dont certaines parties ne figurent pas pour clarifier le dessin ;
- la Fig. 2 représente schématiquement et en perspective un mode de réalisation d'un emballage suivant l'invention ;
- la Fig. 3 représente un autre mode de réalisation d'un emballage suivant l'invention présentant quatre broches ;
- la Fig. 4 représente un détail d'une articulation possible pour l'emballage suivant l'invention ;
- la Fig. 5 représente un dispositif à genouillère utilisable pour les broches utilisées dans l'emballage suivant l'invention ;
- la Fig. 6 représente schématiquement sous la forme écorchée une amélioration supplémentaire de l'invention ;
- la Fig. 7 représente schématiquement un mode de réalisation avantageux de la Fig. 6.

Pour mieux comprendre l'invention, nous pensons qu'il faut connaître les étapes de finition qui permettent d'obtenir des rouleaux papiers photographiques.

Lors de la fabrication des rouleaux de papier photographique, on découpe, dans une nappe de grande dimension (largeur supérieur à 1 200 mm et longueur de l'ordre de 2 000 m) des bandes relativement étroites (95 mm, 102 mm, 127 mm ou plus) que l'on enroule sur des mandrins.

Les machines de coupe classiques utilisées pour la fabrication de ces rouleaux comprennent un poste de déroulement, un poste de coupe et un poste d'enroulement. Le poste de déroulement comprend en général un mécanisme muni de deux pointes permettant de saisir un rouleau de grande largeur (supérieure à 1 200 mm) et de le rendre libre en rotation autour de son axe. L'axe du rouleau grande largeur est horizontal. Le poste de coupe comprend un ensemble de couteaux et de contre-couteaux portés par des arbres rotatifs et permettant de découper la nappe qui se déroule à partir du rouleau grande largeur en bandes individuelles de "petite" largeur (95 mm, 102 mm, 127 mm ou plus par exemple). Le poste d'enroulement comprend des broches entraînées en rotation et sur lesquelles sont montés des mandrins. Les mandrins sont entraînés en rotation par la broche au moyen d'un mécanisme approprié, par exemple du type de celui décrit au brevet Français 2 279 653. Les axes des arbres portant les couteaux et les contre-couteaux, l'axe du rouleau grande largeur et les axes des broches d'enroulement sont parallèles entre eux et horizontaux.

Avantageusement, les broches d'enroulement de la machine de coupe sont montés en porte à faux, c'est-à-dire présentent une extrémité libre et sont entraînées en rotation par leur extrémité fixe. L'extrémité libre permet l'introduction aisée des noyaux vides sur la broche et le retrait facile des rouleaux individuels de "petite" largeur. Habituellement ces rouleaux sont repris pour être emballés individuellement, éventuellement après découpe. Lorsque cette opération est réalisée manuellement, elle est fastidieuse compte tenu du poids des rouleaux. De plus les rouleaux, compte tenu de leur diamètre supérieur à 400 mm et leur faible largeur, présentent une stabilité accrue lorsqu'on les bascule. Aussi faut-il les rebasculer lors de leur utilisation sur les machines. L'invention propose un emballage collectif, ce qui limite la manutention après la formation des rouleaux de "petite" largeur.

Le procédé suivant l'invention consiste à faire coulisser directement les rouleaux de la broche de la machine sur la broche de l'emballage collectif ; ce qui conserve leur orientation aux rouleaux.

Suivant l'invention, on utilise un emballage collectif présentant une broche qui est décrite plus en détail par la suite et dont l'axe est situé dans un plan horizontal. On aligne la broche de l'emballage collectif et la broche à décharger et l'on fait coulisser les rouleaux sur la broche de l'emballage. Avantageusement, l'emballage collectif présentera une dimension telle que l'ensemble des rouleaux situés sur une broche sera transféré, en une seule opération, sur la broche de l'emballage collectif, ce qui limitera au maximum les opérations d'emballage.

Après transfert on immobilise les noyaux sur la broche de l'emballage à la fois en rotation et en translation, par exemple soit par augmentation du diamiètre extérieur de la broche, soit par serrage en bout, agissant sur les mandrins, soit par tout autre moyen approprié.

On remarquera que jusqu'à maintenant, sur les rouleaux disponible dans le commerce, la dimension des mandrins est égale à celle de la bande découpée. En effet compte tenu des problèmes de stabilité, les rouleaux sont entreposés les uns sur les autres avec leurs axes verticaux, ce qui empêche l'utilisation de mandrins débordant la surface latérale des rouleaux. L'utilisation de mandrins débordant cette surface latérale présente l'avantage, lors du déchargement de la broche par déplacement latéral de l'ensemble des rouleaux, de ne pas mettre au contact les surfaces latérales des rouleaux. En effet lors du déplacement latéral des rouleaux, la rotation du rouleau externe est interrompue par frottement avec le dispositif de déplacement. Ce rouleau est déplacé transversalement puis vient au contact du rouleau voisin dont la rotation est interrompue à ce moment par les forces de contact entre les rouleaux, et ainsi de suite jusqu'au dernier rouleau. Lorsque les mandrins sont arasants, les contacts se font par les tranches des bandes, ce qui risque d'endommager les bords des bandes. Aussi préfère-t-on utiliser des mandrins débordant du rouleau. Dans ce cas, l'empilement d'emballages individuels pose des problèmes de stabilité. L'invention permet de s'affranchir de ces problèmes. Bien au contraire, dans un tel emballage, les noyaux débordant la surface latérale des rouleaux permettent de ménager un espace entre les rouleaux. Cet espace permet une manutention ultérieure des rouleaux plus facile.

Il est évident que l'invention peut aussi être utilisée avec des machines de coupe dont les broches ne sont pas en porte à faux mais ceci complique le mécanisme de déchargement. En effet il faut maintenir les rouleaux pour dégager la broche et ensuite introduire les rouleaux un à un sur la broche de l'emballage soit par déplacement des rouleaux soit par déplacement de l'emballage.

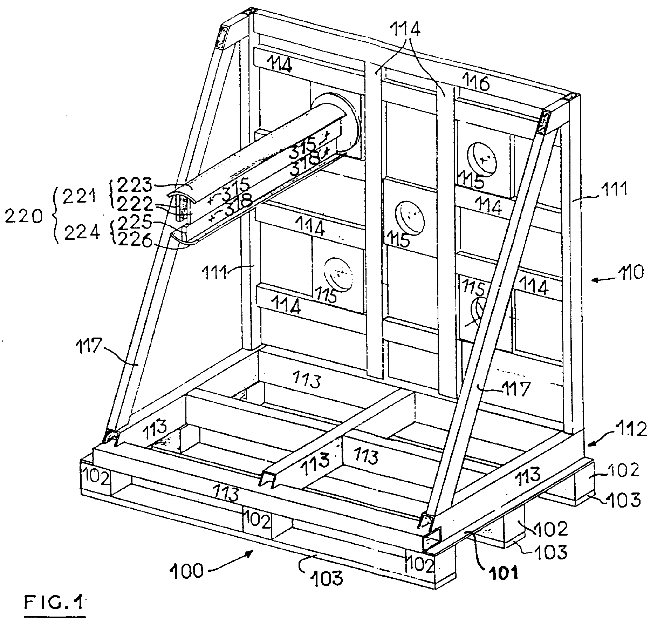

Pour mettre en oeuvre le procédé suivant l'invention de manière simple, on a conçu un emballage dont la structure portante est représentée à la Fig. 1.

Cet emballage est constitué essentiellement d'un socle 100 horizontal et présentant la forme d'une palette de manière à pouvoir être manipulée par exemple par des chariots élévateurs. Le socle 100 comprend un plancher supérieur 101 (dont une partie seulement a été représentée) étanche à la lumière, et des moyens (102, 103) pour espacer ce plancher du sol. Dans le mode de réalisation représenté, les moyens sont constitués de neuf plots 102 répartis sur les longueurs et largeurs du plancher ainsi qu'au milieu. Ils peuvent être reliés entre eux par une planche 103 suivant le sens longitudinal du plancher. Avantageusement la conception du socle et son encombrement sont analogues à ceux d'une palette de type europe. La longueur du socle 100 est inférieure à 120 cm et sa largeur est inférieure à 80 cm.

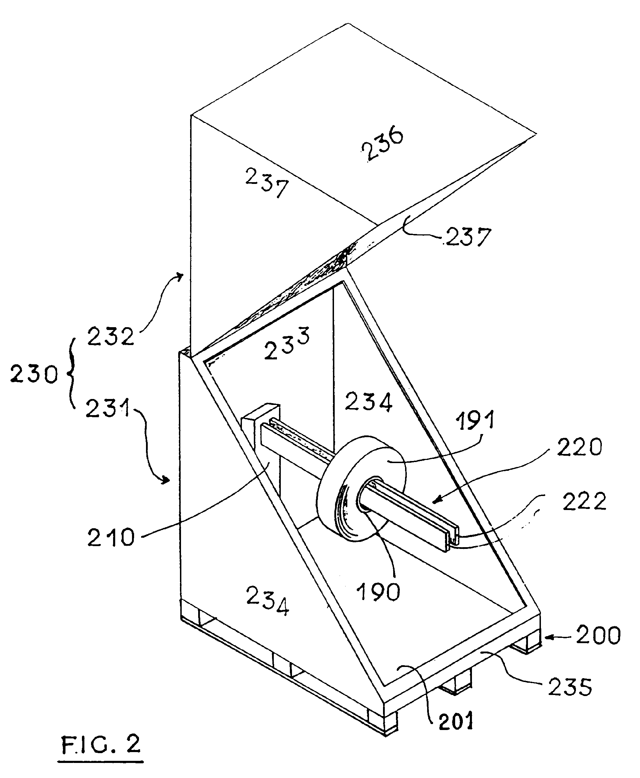

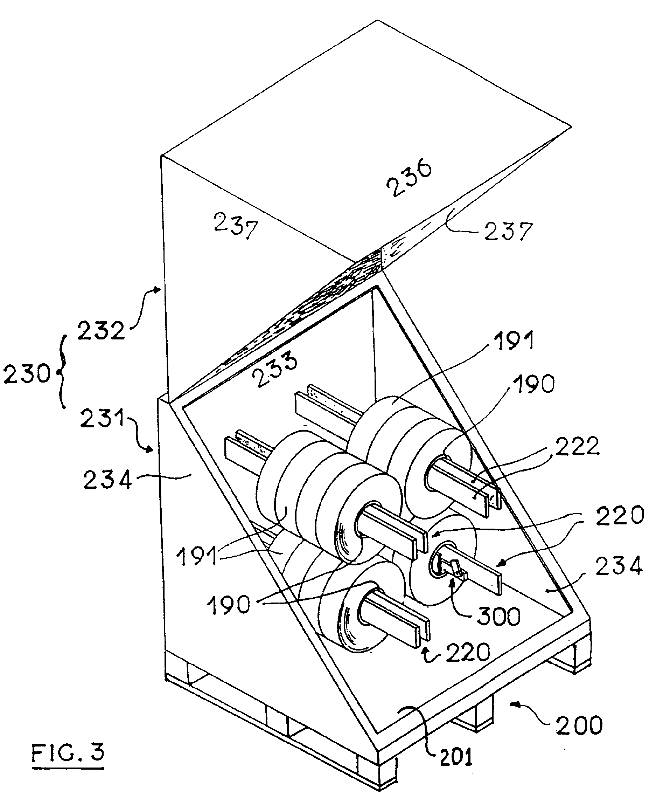

Sur l'un de ces côtés, le socle est muni d'un bâti 110 s'étendant vers le haut. Dans le mode de réalisation représenté, le bâti 110 comprend une embase 112 horizontale qui repose et est fixée sur le plancher 101. L'embase est constituée de poutrelles 113 soudées entre elles de manière à réaliser un treillis horizontal. Le bâti comprend aussi des montants verticaux 111 reliés par une traverse 116 et est destiné à supporter une ou plusieurs broches 220. Avantageusement, les montants verticaux maintiennent des entretoises 114 délimitant un treillis vertical sur lequel on peut disposer plusieurs plaques 115 servant à la fixation des broches. Le bâti 110 est rigidifié par des jambes de force 117. Dans le mode de réalisation de la Fig. 1, on a disposé cinq plaques 115 de manière à pouvoir réaliser, à volonté, soit l'emballage à une broche unique centrale représenté à la Fig. 2, soit l'emballage à quatre broches représenté à la Fig. 3. La broche 220 est fixée par tout moyen approprié à l'une des plaques 115.

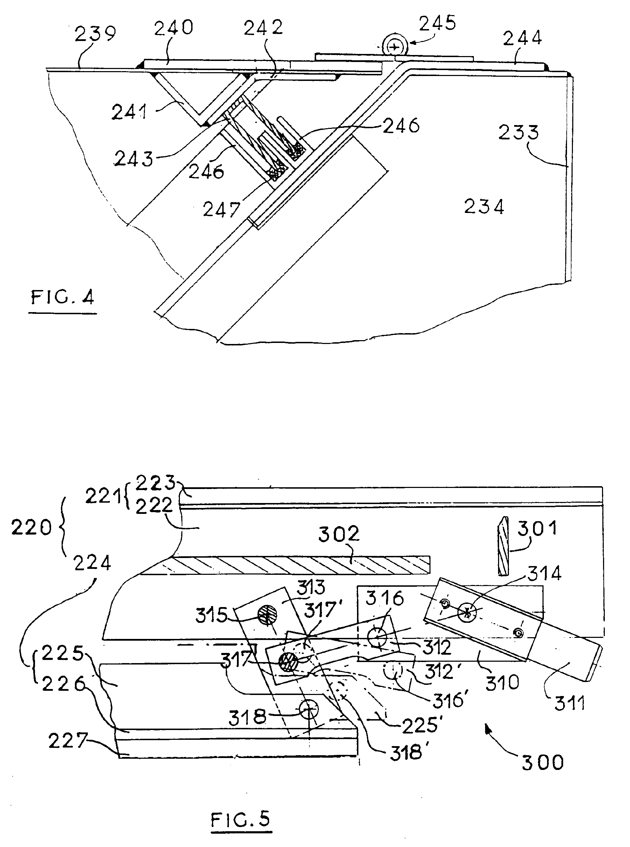

Comme représenté à la Fig. 1, la broche 220 comprend un moyen de verrouillage qui dans le mode de réalisation préféré est obtenu essentiellement par une broche en deux parties : une partie supérieure 221 et une partie inférieure 224. La partie supérieure est solidaire de la plaque 115, et comprend deux barres 222 et une coquille 223 de forme partiellement cylindrique. La partie inférieure 224 est mobile par rapport à la partie supérieure 221, et comprend un guide 225 et une coquille 226. Le guide 225 pénètre entre les barres 222. Nous étudierons plus en détail, en référence à la Fig. 5, le dispositif 300 servant au déplacement de la partie inférieure 224. Il suffit de savoir que ce déplacement sert à faire varier le diamètre externe de la broche 220 de manière à pouvoir enfiler sur cette broche des mandrins d'un diamètre déterminé lorsque le diamètre de la broche est minimal et que cette broche immobilise le mandrin à la fois en rotation et en translation lorsque son diamètre est maximal. Pour éviter la déformation du mandrin lorsqu'on fait croître le diamètre de la broche, les coquilles 223 et 226 présentent une surface partiellement cylindrique de révolution dont le rayon de courbure est égal au rayon intérieur du mandrin. De plus, pour améliorer l'adhérence entre les mandrins et la broche "expansée", la surface externe de la coquille 226 est pourvue d'une nappe 227 (Fig. 5) d'un matériau compressible à fort coefficient d'adhérence tel que du caoutchouc. Comme on le voit sur la Fig. 1 les coquilles 223 et 226 n'ont pas besoin de définir un cylindre de révolution pratiquement complet et on a trouvé que des coquilles dont les portions cylindriques sont soustendues par un angle au centre supérieur à 70° sont suffisantes pour immobiliser le mandrin sans le déformer.

On se réfère maintenant à la Fig. 2, qui représente un emballage suivant l'invention. L'emballage comprend un socle 200 analogue à celui de la Fig. 1 et muni d'un plancher 201. Il peut être déplacé au moyen d'un dispositif à fourche, par exemple, du type chariot élévateur bien connu dans la technique. Le socle 200, en position habituelle horizontale, est muni d'un bâti vertical faisant saillie vers le haut. On fixe à la partie supérieure du bâti 210 une broche 220, schématisé sur cette figure par deux barres 222 parallèles entre elles. L'axe de la broche est parallèle au plan horizontal du support 200.

L'emballage suivant l'invention comprend une enveloppe rigide 230 constituée d'une première partie 231 et d'une seconde partie 232.

La première partie 231 comporte une paroi arrière verticale 233 et une paroi avant verticale 235, qui sur la figure présente une très petite dimension, reliées entre elles par deux parois latérales 234. La seconde partie 232 est délimitée par une paroi supérieure 239 (voir Fig. 4), une paroi frontale 236 et deux parois latérales 237. Il est évident que l'enveloppe peut prendre toute forme appropriée.

Dans un mode de réalisation préféré, les deux parties 231 et 232 sont articulées entre elles de manière à délimiter une ouverture permettant d'accéder à l'extrémité libre de la broche. Dans le mode de réalisation représenté l'ouverture peut être qualifiée d'ouverture totale car la broche est facilement accessible à un opérateur pour son chargement et son déchargement.

Il est avantageux de relier les deux parties articulées au moyen d'un dispositif approprié, tel que par exemple ressort à gaz, de manière à compenser le poids de la seconde partie 232 lors de l'ouverture. On pourra prévoir un système de blocage de manière à laisser l'enveloppe 230 ouverte en utilisant les ressorts à gaz STABILUS® vendu par la société S.K.F. de type Lift-o-Stop ou Hydro-Lift.

Suivant un mode de réalisation préféré l'enveloppe présente la forme d'un parallélépipède rectangle et l'enveloppe est suffisamment rigide pour permettre l'empilement de plusieurs emballages les uns sur les autres.

Avantageusement, l'emballage suivant l'invention est utilisé pour le transport de rouleaux 191 de produits photosensibles découpées en bandes et enroulées sur des mandrins 190. Dans ce cas, l'enveloppe doit entourer les rouleaux 191 d'une manière étanche à la lumière. La liaison entre le socle 200 et l'enveloppe doit être étanche à la lumière. Si l'enveloppe n'est pas solidaire du socle, l'étanchéité peut être obtenue par des chicanes doubles du type de celles décrites par la suite. Si l'enveloppe comprend deux parties, comme représenté à la Fig. 2 par exemple, le socle 200 présente un plancher 201 comprenant une surface supérieure continue opaque à la lumière, la première partie et la seconde partie de l'enveloppe sont faites en matériau opaque à la lumière et le raccordement entre les deux parties est obtenu par l'intermédiaire de chicanes, analogues à celles représentées sur la Fig. 4.

On se réfèrera maintenant à la Fig. 4 qui décrit schématiquement un mode de réalisation possible de l'articulation entre les deux parties de l'enveloppe, ainsi que l'utilisation d'une chicane pour assurer l'étanchéité à la lumière.

La paroi supérieure 239 de la seconde partie, présente un renfort 240 associé à une équerre 241 et à un élément de jonction 242. On fixe, sur l'élément 242 et l'équerre 241, par tout moyen approprié tel que par exemple vis ou soudage, un cavalier 243 en forme de "U". La portion supérieure de la première partie 231 de l'enveloppe est munie d'une pièce 244 de renfort. On fixe une charnière 245 sur la pièce de renfort 244 et sur le renfort 240 de manière à obtenir l'articulation de la seconde partie 232 de l'enveloppe 230 sur la première partie 231 de cette enveloppe. En regard du cavalier 243 on fixe deux rails en "U" 246 qui coopèrent chacun avec une des ailes du cavalier 243. De cette manière on obtient une chicane double permettant l'étanchéité à la lumière. Il est évident que les longueurs et les largeurs des rails 246 et du cavalier 243 sont adaptées pour permettre une coopération entre ces éléments. Il est évident que la totalité du pourtour de l'ouverture, délimitée par les première et seconde parties, est pourvue d'une chicane formant joint d'étanchéité à la lumière. Avantageusement, le fond des rails est pourvu d'un matériau souple 247, par exemple du type mousse de plastique à alvéoles, qui coopère avec l'extrémité des ailes du cavalier 243 pour obtenir une meilleure étanchéité.

La Fig. 3 est un schéma d'un autre mode de réalisation. On a utilisé les mêmes références pour les éléments analogues. Dans ce mode de réalisation l'emballage est muni de quatre broches 220 qui sont schématisés, comme sur la Fig. 2 par deux barres parallèles 222. Sur cette figure, l'une des barres a été partiellement arrachée et laisse apparaître une partie du dispositif 300 servant à faire varier le diamètre externe de la broche et qui sera décrit plus en détail par la suite. De plus le schéma a été simplifié pour la compréhension du dessin et ne mentionne pas le bâti 210.

Nous allons décrire maintenant en référence à la Fig. 5 le dispositif 300 permettant de faire varier le diamètre externe de la broche 200.

Comme indiqué préalablement, le rail 225 est mobile par rapport aux barres 222. Pour ce faire on relie le rail 225 aux barres 222 au moyen de deux pièces 313 articulées et disposées au voisinage de chacune des extrémités de la broche (voir Fig. 1). Les pièces 313 sont articulées en 315 sur les barres 222 et en 318 sur le rail 225 de manière à délimiter un parallélogramme déformable. Les deux axes 315 sont fixes par rapport à la broche 220. On commande le mouvement des pièces 313 au moyen du dispositif 300 à genouillère. L'articulation à genouillère est constituée d'un organe 310 articulé sur les barres 222 en 314 et d'un élément 312 articulé par une extrémité en 317 à la pièce 313 et par l'autre extrémité en 316 à l'organe 310. L'organe présente un téton de commande 311 qui permet de faire basculer l'organe autour de l'axe 314. La broche 220 est pourvue de butées 301 et 302 limitant l'amplitude du basculement de l'organe 310. Comme on le voit sur le dessin, le basculement de l'organe 310 dans le sens contraire des aiguilles d'une montre (Fig. 5) provoque le déplacement de l'axe 316 vers le bas dans la position 316′. En même temps on obtient un déplacement de l'élément 312 qui prend la position 312′ (représentée en trait mixte sur la Fig. 5). Ceci provoque un déplacement vers la droite, sur la Fig. 5, de l'axe d'articulation 317 qui vient en 317' provoquant aussi le déplacement vers la droite et vers le haut de l'axe 318 qui vient en 318′ et déplace vers le haut le rail 225 qui vient en 225′ (dans la position représentée en trait mixte sur la Fig. 5). Lorsqu'on bascule à nouveau l'organe 310 dans le sens des aiguilles d'une montre pour la Fig. 5 les diverses pièces mécaniques reprennent leur position initiale puis l'organe vient appuyer sur la butée 302 après que l'axe 316 ait franchi la position d'équilibre représentée à la Fig. 5 dans laquelle les axes 314, 316 et 317 sont alignés. Dans cette position, le diamètre externe de la broche est supérieur au diamètre de la broche lorsque le rail est dans la position 225′ et immobilise à la fois en rotation et en translation tout mandrin que l'on aurait enfilé sur la broche 220.

Dans un mode de réalisation préféré de l'emballage suivant l'invention, on utilise une housse 400 opaque à la lumière pour recouvrir les rouleaux individuels maintenus par chaque broche. Cette housse présente deux avantages. Le premier réside dans la protection contre l'humidité. En effet, la paroi de l'enveloppe rigide est soumise à des variations importantes de températures ce qui provoque, dans certaines conditions, l'apparition de condensation sur la paroi supérieure et des risques que des gouttes d'eau tombent sur la surface du papier. Une housse permet de diminuer considérablement le volume d'air emprisonné ce qui diminue dans la même proportion la condensation. Le second avantage n'existe que dans les emballages collectifs présentant plusieurs broches. La housse est une protection supplémentaire qui évite la détérioration de l'ensemble des rouleaux, si par inadvertance on n'est pas dans l'obscurité lorsqu'on ouvre l'emballage collectif pour prélever un rouleau de papier.

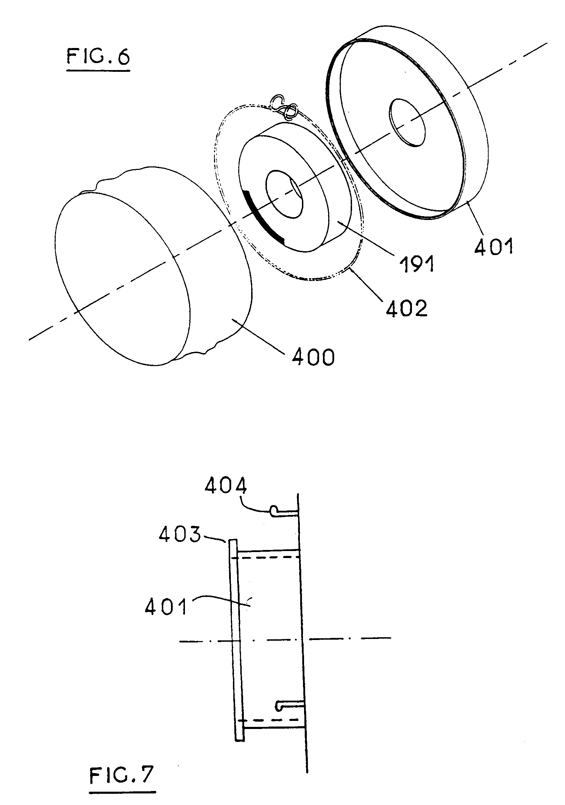

La Fig. 6 décrit un mode de réalisation possible pour fixer la housse de façon pratiquement étanche à la lumière.

La paroi arrière est munie d'une joue 401 en saillie délimitant une surface cylindrique de révolution sur laquelle viendra s'appuyer la housse. Le diamètre interne de cette joue est un peu supérieur au diamètre externe des rouleaux reçu par l'emballage de manière à ne pas géner l'empilement des rouleaux.

On fixe la housse 400 sur la joue 401 par exemple au moyen d'un jonc élastique 402 analogue à celui représenté à la Fig. 6. Il est évident que l'on obtiendra une meilleure étanchéité si le bord de la joue 401 qui est le plus éloigné de la paroi de l'enveloppe 230 présente un bourrelet 403 comme représenté sur la Fig. 7. De plus on pourra prévoir trois ergots 404 disposés à 120° pour servir de support au jonc élastique 402 lorsque la housse n'est pas en place.

La housse décrite préalablement est souple mais il est évident qu'elle peut être remplacée par un cache rigide que l'on enfile sur les rouleaux. Le cache peut être fixé sur le fond de l'enveloppe 230 par exemple par un système à baïonnette.

Il est évident que si les conditions ou le type de produit à emballer le nécessite, l'enveloppe 230 peut être une enveloppe isolante thermiquement ou même une enveloppe thermostatée.

## Revendications

1. Emballage collectif réutilisable pour produit photographique enroulé sur des mandrins (190) de manière à former des rouleaux (191), comprenant :
a) un socle (200), opaque à la lumière, présentant une surface principale et adapté à la manutention par chariot élévateur ;
b) une enveloppe (230) rigide, opaque à la lumière et reliable audit socle par un moyen étanche à la lumière ;
c) au moins une broche (220) présentant une extrémité libre, solidaire du socle, susceptible de maintenir à l'intérieur de l'enveloppe plusieurs rouleaux de produit photographiques de manière que l'axe desdits rouleaux soit pratiquement parallèle à ladite surface principale dudit socle;
d) un moyen de verrouillage pouvant être mis en oeuvre à partir de l'extérieur de ladite enveloppe rigide pour, dans un premier état, immobiliser lesdits mandrins par rapport à ladite broche et dans un second état rendre indépendant les uns des autres ladite broche solidaire du socle et lesdits mandrins.

2. Emballage selon la revendication 1, dans lequel ladite broche (220) est pratiquement parallèle à la surface principale du socle et ledit moyen de verrouillage est agencé de manière que le diamètre de ladite broche puisse varier entre une première dimension dans laquelle on peut faire coulisser sur cette broche lesdits mandrins et une seconde dimension, supérieure à la première, dans laquelle lesdits mandrins sont immobilisés sur cette broche.

3. Emballage selon la revendication 2, dans lequel l'extrémité libre de la broche est adaptée de manière à pouvoir recevoir lesdits rouleaux et dont l'autre extrémité est rendue solidaire du socle par un bâti.

4. Emballage selon la revendication 3, dans lequel le moyen de verrouillage de la broche est obtenu par une broche en au moins deux parties.

5. Emballage selon la revendication 4, dans lequel la broche comprend une coquille entourant au moins partiellement l'axe de la broche et délimité par au moins deux parties présentant chacune une portion de surface pratiquement cylindrique de révolution sur laquelle on dispose les rouleaux, et un dispositif pour éloigner et rapprocher les deux parties l'une par rapport à l'autre.

6. Emballage selon la revendication 5, dans lequel la coquille comprend deux parties, caractérisé en ce que chaque portion de surface pratiquement cyclindrique est sous-tendue par un angle de 70° minimum.

7. Emballage selon la revendication 5, dans lequel le dispositif comprend un mécanisme à genouillère pour maintenir les deux parties dans leur position éloignée lorsque les rouleaux sont disposés sur la broche.

8. Emballage selon la revendication 3, dans lequel l'enveloppe comprend une première partie (231) reliée en permanence au socle et une seconde partie (232) mobile par rapport à la première partie de manière à permettre l'accès à l'extrémité libre de la ou des broches afin de pouvoir enfiler ou extraire les rouleaux sur ladite ou sur lesdites broches.

9. Emballage selon la revendication 8 dans lequel la seconde partie de l'enveloppe est articulée sur la première partie.

10. Emballage selon l'une quelconque des revendications 8 et 9 dans lequel la seconde partie présente une surface supérieure au tiers de la surface totale de l'enveloppe.

11. Emballage suivant l'une quelconque des revendications 2 à 10 dans lequel l'enveloppe est munie d'un moyen d'accrochage permettant de fixer à une paroi de cette enveloppe rigide une housse entourant les rouleaux disposés sur la broche.

12. Procédé d'emballage de produit en bandes dans lequel les bandes, qui sont obtenues à partir de la découpe en bandes d'une feuille présentant une largeur importante, sont enroulées sur des mandrins portés par une broche de machine de coupe de manière à former des rouleaux, procédé consistant à, après découpe de la feuille et formation des rouleaux, faire coulisser directement les rouleaux de la broche de machine de coupe sur la broche d'un emballage collectif, broche dont le diamètre de ladite broche présente une première dimension et finalement modifier ledit diamètre de la broche de l'emballage collectif de manière à ce qu'il prenne une seconde dimension plus grande que ladite première dimension afin d'immobiliser lesdits rouleaux.

## Patentansprüche

1. Wiederverwendbare Sammelverpackung für auf Wickelkerne (190) in Rollenform (191) aufgewickeltes fotografisches Material, gekennzeichnet durch
a) ein aus lichtundurchlässigem Material bestehendes, eine Grundfläche aufweisendes und mittels eines Hubfahrzeugs förderbares Bodenteil (200),
b) eine steife, lichtundurchlässige, mittels eines lichtundurchlässigen Elements mit dem Bodenteil (200) verbindbare Box (230),
c) mindestens einen mit dem Bodenteil (200) verbundenen, ein freies Ende aufweisenden Dorn (220), dessen Achse im wesentlichen parallel zur Grundfläche des Bodenteils verläuft und zum Haltern einer Mehrzahl von aus fotografischem Material bestehender Rollen (191) innerhalb der Box (230) dient,
d) frei zugängliche Verriegelungsmittel (300), die in einem ersten Zustand ein Festlegen und in einem zweiten Zustand das Lösen der Wickelkerne (190) auf bzw. von dem mit dem Bodenteil (200) verbundenen Dorn bewirken.

2. Verpackung nach Anspruch 1, dadurch gekennzeichnet, daß durch Betätigung des Verriegelungsmittels (300) eine Querschnittsveränderung des Dorns (220) bewirkbar ist, derart, daß in einem ersten Zustand des Verriegelungsmittels eine Querschnittsverringerung des Dorns erfolgt, so daß die Wickelkerne auf dem Dorn frei bewegbar sind und daß in einem zweiten Zustand der Verriegelungsmittel eine Querschnittsvergrößerung des Dorns erfolgt, um die Wickelkerne (190) auf dem Dorn festzulegen.

3. Verpackung nach Anspruch 2, dadurch gekennzeichnet, daß das freie Ende des Dorns (220) ein Aufbringen der Rollen (191) ermöglicht, während sein anderes Ende an einem mit dem Bodenteil (200) verbundenen Gerüst (110) befestigt ist.

4. Verpackung nach Anspruch 3, dadurch gekennzeichnet, daß die Querschnittsveränderbarkeit des Dorns (220) durch dessen mindestens zwei Teile umfassende Ausbildung erzielbar ist.

5. Verpackung nach Anspruch 4, dadurch gekennzeichnet, daß die mindestens zwei Teile (222) des Dorns (220) die Dornachse hohlachsenförmig zumindest teilweise umgeben und ihre Außenflächen zur Halterung der Wickelkerne (190) gleiche Zylinderradien zur abschnittsweisen Bildung einer gemeinsamen Zylindermantelfläche besitzen und daß eine Vorrichtung (300) zum Beabstanden der Teile voneinander oder zu ihrer gegenseitigen Annäherung vorgesehen ist.

6. Verpackung nach Anspruch 5 mit einem aus zwei hohlachsenförmigen Teilen bestehenden Dorn (220), dadurch gekennzeichnet, daß sich die Zylindermantelflächenabschnitte der Teile (222) jeweils über mindestens 70 Winkelgrade des Dornumfangs erstrecken.

7. Verpackung nach Anspruch 5, dadurch gekennzeichnet, daß die Vorrichtung (300) einen Kniehebelmechanismus enthält, um die Teile (222) nach dem Aufbringen der Rollen (19) auf den Dorn (220) in gegenseitigem Abstand zu halten.

8. Verpackung nach Anspruch 3, dadurch gekennzeichnet, daß die Box (230) aus einem dauerhaft mit dem Bodenteil (200) verbundenen ersten Abschnitt (231) und einem hierzu derart beweglich angeordneten zweiten Abschnitt (232) besteht, daß das die freie(n) Ende(n) des/der Dorns/Dorne (220) zum Aufbringen oder Entfernen der Rollen (191) zugänglich sind.

9. Verpackung nach Anspruch 8, dadurch gekennzeichnet, daß der zweite Abschnitt (232) über den ersten Abschnitt (231) der Box (230) schwenkbar ist.

10. Verpackung nach Anspruch 8 oder 9, dadurch gekennzeichnet, daß die Größe der Mantelfläche des zweiten Abschnitts (232) ein Drittel der gesamten Box-Mantelfläche übersteigt.

11. Verpackung nach einem oder mehreren der Ansprüche 2 bis 10, dadurch gekennzeichnet, daß an einem Wandungsteil der steifen Box (230) Befestigungsmittel für eine die auf dem Dorn (220) befindlichen Rollen (191) schützende Abdeckung (400) aufweist.

12. Verpackungsverfahren für mittels einer Trennvorrichtung von Bahnmaterial abgetrennter Bandmaterialrollen, die auf eine Anzahl von einem Dorn der Vorrichtung getragener Wickelkerne gewickelt sind, dadurch gekennzeichnet, daß die fertigen Bandmaterialrollen von dem Vorrichtungsdorn unmittelbar auf den Dorn einer Sammelverpackung aufgeschoben wurden, während der Dorn eine erste Durchmessergröße aufweist, und daß nach Aufbringen der Rollen die Dorndurchmessergröße erhöht wird, um die Rollen auf dem Dorn unverrückbar festzulegen.

## Claims

1. Reusable collective packing for photographic web materials wound round tubes (190) so as to form rolls (191), comprising :
a) a lightproof base (200) having a main surface and adapted for handling by lift truck,
b) a rigid lightproof case (230) which can be connected to the base through lightproof means ;
c) at least a spindle (220) having a free end, connected to the base and adapted to maintain, in the lightproof case, several rolls of photographic material so that the axis of said rolls are substantially parallel to said main surface of said base ; and
d) locking means operatable from the outside of said rigid lightproof case, in order to, in a first state, blocking said tubes with respect to said supporting means and, in a second state, freeing said tubes with respect to said spindle connected to the base.

2. Packing according to claim 1, wherein said spindle (220) is substantially parallel to said main surface of said base and said locking means is adapted to modify the diameter of said spindle between a first dimension wherein tubes can slide on said spindle and a second dimension, greater than the first, wherein said winding tubes are immobilized on said spindle.

3. Packing according to claim 2, wherein incorporates a free end of said spindle is adapted so as to be able to receive said rools, with the other end fixed to said base by means of a frame.

4. Packing according to claim 3, wherein the locking means is provided by a multipart spindle.

5. Packing according to claim 4, wherein the spindle comprises a shell covering at least in part the axis of the spindle and formed of at least two parts, each incorporating a portion of almost cylindrical surface generated by rotation, on which the rolls are positioned, and a device to separate and bring together the two parts in relation to each other.

6. Packing according to claim 5 in which the shell comprises two parts, characterised by the fact that each portion of the almost cylindrical surface is subtented by a minimum angle of 70°.

7. Packing according to claim 5, wherein the device comprises a toggle joint device to hold the two parts in their separated position when the rolls are positioned on the spindle.

8. Packing according to claim 3 wherein the case comprises a first part (231) connected permanently to the base and a second part (232) which can be moved in relation to the first part, such as to provide access to the free end of the spindles for the purpose of inserting or removing the rolls on said spindles.

9. Packing according to claim 8 wherein the second part of the case is hinged to the first part.

10. Packing according to either claim 8 or 9 wherein the surface of the second part is greater than one third of the total surface of the case.

11. Packing according to any one of the claims 1 to 10 wherein the case is fitted with a fastening means for securing to the wall of this rigid case a cover enclosing means for covering the rolls positioned on the spindle.

12. Packing process for web materials in which webs, obtained by cutting large width sheets into webs, are wound round tubes held on a cutting machine spindle so as to form rolls ; after cutting the sheet and forming the rolls, this process consists in directly sliding the rolls from the cutting machine spindle onto a spindle of a collective packing system ; the diameter of said spindle having a first dimension, and finally modifying the diameter of the spindle of said collective package so that it presents a second dimension greater than the first dimension in order to immobilize the tubes.
